# EUROPÄISCHE PATENTSCHRIFT

(11) **EP 4 299 299 B1**
(45) Veröffentlichungstag und Bekanntmachung des Hinweises auf die Patenterteilung: **03.12.2025**
(21) Anmeldenummer: 23171680.4
(22) Anmeldetag: 04.05.2023
(51) Int. Cl.: B29D 30/72, B60C 13/00

(54) **VERFAHREN ZUM AUFBRINGEN EINER CODIERUNG AUF EINE SEITENWAND EINES FAHRZEUGREIFENS**
METHOD FOR APPLYING A CODE TO A SIDEWALL OF A VEHICLE TYRE
PROCÉDÉ D'APPLICATION D'UN CODAGE SUR UNE PAROI LATÉRALE D'UN PNEU DE VÉHICULE

(30) Priorität: 27.06.2022 DE 102022206413
(43) Veröffentlichungstag der Anmeldung: 03.01.2024
(73) Patentinhaber: Continental Reifen Deutschland GmbH, 30175 Hannover (DE)
(72) Erfinder: Dr. Berger, Florian, 30165 Hannover (DE); Kristen, Florian, 30165 Hannover (DE); Dr. Peters, René, 30165 Hannover (DE); Lehmann, Gabriele, 30165 Hannover (DE)
(74) Vertreter: Continental Corporation

(56) Entgegenhaltungen:
- EP-A1- 3 498 500
- EP-A1- 3 603 997
- WO-A1-2005/000714
- DE-A1- 102008 010 486
- JP-A- 2017 081 305
- JP-A- 2020 006 706
- US-A1- 2019 135 011

## Beschreibung

Die Erfindung betrifft ein Verfahren zum Aufbringen einer Codierung auf eine Seitenwand eines Fahrzeugreifens.

Es ist bekannt, dass Fahrzeugreifen mit einer Codierung versehen werden, die maschinenlesbar sind. Ein Problem beim Aufbringen der Codierung kann darin bestehen die geeignete Position für die Codierung auf dem Fahrzeugreifen zu finden.

Die Patentdokumente EP 3 603 997 A1, US 2019/135011 A1 und JP 2020 006706 A offenbaren Verfahren zur Aufbringung von Codierungen auf Fahrzeugreifen. Weitere Fahrzeugreifen mit Markierungen sind in den Dokumenten JP 2017 081305 A und DE 10 2008 010486 A1 offenbart.

Der Erfindung liegt die Aufgabe zugrunde, ein Verfahren bereitzustellen mit dem das Aufbringen der Codierung auf dem Fahrzeugreifen verbessert wird. Außerdem soll ein Fahrzeugreifen bereit gestellt werden, mit dem das Aufbringen der Codierung auf einfache Weise erfolgen kann.

Gelöst wird die Aufgabe gemäß Anspruch 1 dadurch, dass ein Verfahren mit folgenden Schritten eingesetzt wird:
a) Bereitstellen eines Fahrzeugreifens an einer Haltevorrichtung,
b) Einsatz einer Kamera und einer Bilderkennungs-Applikation um eine Markierung auf der Seitenwand (1) des Fahrzeugreifens zu detektieren,
c) Detektieren der Markierung (2) in Form von zwei zusammen gesetzten Dreiecken,
   wobei die Dreiecke kongruent und an einer der Dreicksspitzen miteinander verbunden sind,
d) Eingravieren einer Codierung auf einer freien Fläche (5,6) neben der Markierung (2).

Ein Vorteil der Erfindung ist insbesondere darin zu sehen, dass durch das neue Verfahren das Aufbringen einer Codierung auf den Fahrzeugreifen wesentlich verbessert wird. Auf der Seitenwand des Fahrzeugreifens wird eine besonders prägnante Markierung in Form von zwei kongruenten Dreiecken aufgebracht, die an einer der drei Dreieckspitzen miteinander verbunden sind. Diese sehr prägnante Markierung auf der Seitenwand kann mit einer Bildverarbeitungssoftware und einer entsprechenden Kamera schnell und sicher auf der Seitenwand eines Fahrzeugreifens detektiert werden. Die prägnante Markierung hat insbesondere den Vorteil, dass sie nicht durch Buchstaben oder andere Symbole auf der Seitenwand verwechselt werden kann. Sie hat eine sehr hohe Unterscheidungskraft gegenüber anderen Symbolen und kann mit einer Bildverarbeitungssoftware mit einer hohen Sicherheit detektiert werden. Dieser Vorteil konnte insbesondere in zahlreichen Versuchen nachgewiesen werden.

In einer vorteilhaften Weiterbildung der Erfindung ist vorgesehen, dass die Markierung mit den zwei zusammen gesetzten Dreiecken in Form einer aufrecht stehenden Sanduhr auf der Seitenwand des Fahrzeugreifens ausgebildet ist. Dadurch besitzt die Markierung eine besonders prägnante Ausgestaltung, die eine hohe Unterscheidungskraft gegenüber anderen Symbolen besitzt. Im Ergebnis kann diese Markierung schnell und mit einer hohen Sicherheit mit einer Kamera und einer angeschlossenen Bildverarbeitungssoftware identifiziert werden.

In einer weiteren vorteilhaften Weiterbildung der Erfindung ist vorgesehen, dass die Breitenabmessung der Sanduhr 3,5 mm bis 14 mm, vorzugsweise 6 bis 8 mm, beträgt.

Dadurch kann die Markierung schnell und sicher mit der Bildverarbeitung detektiert werden.

**In** einer weiteren vorteilhaften Weiterbildung der Erfindung ist vorgesehen, dass die Höhenabmessung der Sanduhr 7 mm bis 28 mm, vorzugsweise 13 bis 15 mm, beträgt.

**In** einer weiteren vorteilhaften Weiterbildung der Erfindung ist vorgesehen, dass die Markierung der Sanduhr gegenüber dem Untergrund der Seitenwand heraus ragt, wobei die Tiefenabmessung gegenüber dem Untergrund zwischen 0,3 mm bis 0,8 mm, vorzugsweise 0,4 bis 0,8 mm, beträgt.

Dadurch hebt sich die Markierung prägnant gegenüber dem Untergrund ab und kann mit der Bildverarbeitungssoftware schneller erkannt werden.

**In** einer weiteren vorteilhaften Weiterbildung der Erfindung ist vorgesehen, dass die Markierung der Sanduhr in seinen Randbereichen eine Fase aufweist. Dadurch besitzt die Markierung gegenüber dem Untergrund einen hohen Kontrast.

**In** einer weiteren vorteilhaften Weiterbildung der Erfindung ist vorgesehen, dass der Flankenwinkel der Fase gegenüber dem Untergrund der Seitenwand zwischen 0 bis 45 Grad, vorzugsweise zwischen 10 und 30 Grad, beträgt.

Mit diesen Flankenwinkeln lässt sich ein hoher Bildkontrast erzeugen, der die Identifizierung der Markierung vereinfacht.

**In** einer weiteren vorteilhaften Weiterbildung der Erfindung ist vorgesehen, dass die Markierung bei der Reifenvulkanisation in die Seitwand des Fahrzeugreifens aufgebracht wird .

Dadurch lässt sich die Markierung auf einfache Weise auf der Seitenwand aufbringen.

**In** einer weiteren vorteilhaften Weiterbildung der Erfindung ist vorgesehen, dass das Eingravieren der Codierung mit einem Laser erfolgt.

Mit dem Laser lässt sich die Codierung mit einer hohen Geschwindigkeit auf den Fahrzeugreifen aufbringen.

**In** einer weiteren vorteilhaften Weiterbildung der Erfindung ist vorgesehen, dass die Codierung einen QR-Code und/ oder einen zweiten Code umfasst.

Diese Art der Codierung lässt sich einfach mit einem entsprechenden Scanner auslesen.

Anhand von Ausführungsbeispielen soll die Erfindung näher erläutert werden. Es zeigt:
Fig. 1: Einen Teilausschnitt einer Seitenwand von einem Fahrzeugreifen.
Fig. 2.: Eine Schnittansicht durch die Markierung 2.

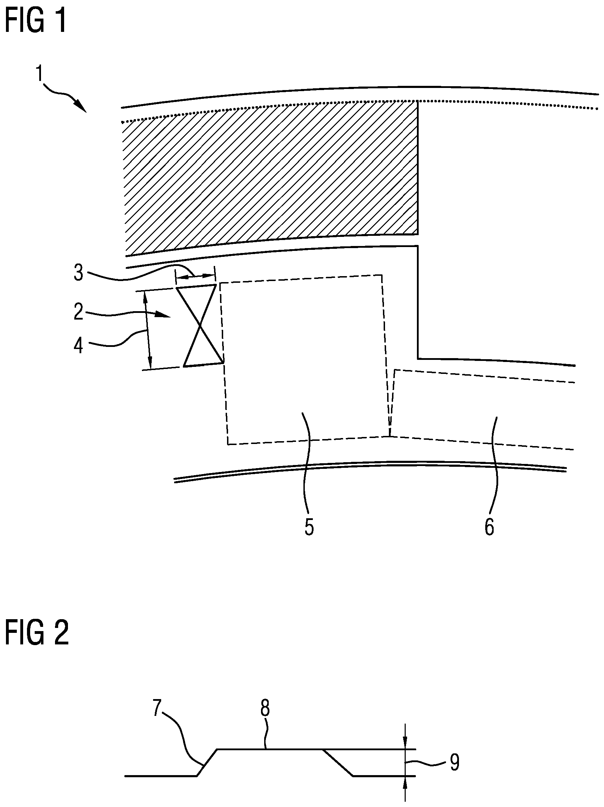

Die Figur 1 zeigt einen Teilausschnitt einer Reifenseitenwand 1. Auf der Seitenwand 1 ist an einer bestimmten Position eine Markierung 2 in Form von zwei Dreiecken angeordnet. Die zwei Dreiecke sind kongruent und an einer der Dreieckspitzen miteinander verbunden. Bei diesem Ausführungsbeispiel ist die Markierung 2 in Form einer stilisierten aufrechten Sanduhr ausgebildet. Die Oberseite der Markierung 2 ragt gegenüber dem Untergrund der Seitenwand 1 heraus. Die Tiefenmessung der Markierung 2 gegenüber dem Untergrund beträgt zwischen 0,3 mm und 0,8 mm. Der Randbereich der Markierung 2 weist eine Fase auf. **In** der Figur ist ebenfalls die Breitenabmessung 3 und die Höhenabmessung 4 der Markierung in Form einer Sanduhr dargestellt.

Auf der Reifenseitenwand 1 sind im Normalfall eine Vielzahl von Symbolen und Beschriftungen angeordnet. Mit einer Kamera und einer angeschlossenen Bildverarbeitungssoftware wird die Markierung auf der Seitenwand abgescannt und gesucht. Bei diesem Vorgang ist der Fahrzeugreifen in einer Haltevorrichtung angeordnet und die Seitenwand des Reifens wird dabei relativ zur Kamera verfahren. Sobald die Kamera die Markierung 2 identifiziert hat, wird mit der Bildverarbeitung die Position auf der Seitenwand erfasst und auf einem Datenspeicher gespeichert. Anschließend wird neben der Markierung 2 in einem freien Bereich 5 oder 6 auf der Seitenwand eine Codierung aufgebracht. **In** dem Bereich 5 wird mit einem Laser eine Codierung, z.B. einen QR-Code, eingraviert. Außerdem kann auf die freie Fläche 6 ein zweiter Code, z.B. ein Barcode, eingraviert werden. Der zweite Code kann beispielsweise das Herstellungsdatum des Fahrzeugreifens umfassen.

Die Figur 2 zeigt eine schematische Schnittansicht von der Markierung 2. **In** dieser Schnittansicht ist die Fase 7 der Markierung 2 dargestellt. Der Flankenwinkel der Fase 7 beträgt zwischen 0 und 45°. Außerdem ist in der Figur die Tiefenabmessung 9 dargestellt, die sich auf die Oberseite 8 der Markierung und dem Untergrund der Seitenwand 1 bezieht.

### Bezugszeichenliste (ist Teil der Beschreibung)

- 1: Seitenwand eines Fahrzeugreifens
- 2: Markierung in Form von zwei Dreiecken
- 3: Breitenabmessung der zusammengesetzten Dreiecke bzw. Sanduhr
- 4: Höhnenabmessung der zusammengesetzten Dreiecke bzw. Sanduhr
- 5: Freie Fläche für Codierung, z.B. QR-Code
- 6: Freie Fläche für zweiten Codierung, z.B. Barcode
- 7: Fase im Randbereich der Markierung
- 8: Oberseite der Markierung
- 9: Tiefenabmessung der Markierung

## Patentansprüche

1. Verfahren zum Aufbringen einer Codierung auf eine Seitenwand (1) eines Fahrzeugreifens mit folgenden Schritten:
a) Bereitstellen eines Fahrzeugreifens an einer Haltevorrichtung,
b) Einsatz einer Kamera und einer Bilderkennungs-Applikation um eine Markierung auf der Seitenwand (1) des Fahrzeugreifens zu detektieren,
c) Detektieren der Markierung (2) in Form von zwei zusammen gesetzten Dreiecken,
wobei die Dreiecke kongruent und an einer der Dreicksspitzen miteinander verbunden sind,
d) Eingravieren einer Codierung auf einer freien Fläche (5,6) neben der Markierung (2).

2. Verfahren nach Anspruch 1,
**dadurch gekennzeichnet, dass**
die Markierung (2) mit den zwei zusammen gesetzten Dreiecken in Form einer aufrecht stehenden Sanduhr auf der Seitenwand (1) des Fahrzeugreifens ausgebildet ist.

3. Verfahren nach Anspruch 2,
**dadurch gekennzeichnet, dass**
die Breitenabmessung (3) der Sanduhr 3,5 mm bis 14 mm, vorzugsweise 6 bis 8 mm, beträgt.

4. Verfahren nach einem der vorhergehenden Ansprüche 2 bis 3,
**dadurch gekennzeichnet, dass**
die Höhenabmessung (4) der Sanduhr 7 mm bis 28 mm, vorzugsweise 13 bis 15 mm, beträgt.

5. Verfahren nach einem der vorhergehenden Ansprüche 2 bis 4,
**dadurch gekennzeichnet, dass**
die Markierung (2) der Sanduhr gegenüber dem Untergrund der Seitenwand (1) heraus ragt, wobei die Tiefenabmessung (9) gegenüber dem Untergrund zwischen 0,3 mm bis 0,8 mm, vorzugsweise 0,4 bis 0,8 mm, beträgt.

6. Verfahren nach einem der vorhergehenden Ansprüche 2 bis 5,
**dadurch gekennzeichnet, dass**
die Markierung (2) der Sanduhr in ihren Randbereichen eine Fase (7) aufweist.

7. Verfahren nach Anspruch 6,
**dadurch gekennzeichnet, dass**
der Flankenwinkel der Fase (7) gegenüber dem Untergrund der Seitenwand zwischen 0 bis 45 Grad, vorzugsweise zwischen 10 und 30 Grad, beträgt.

8. Verfahren nach einem der vorhergehenden Ansprüche,
**dadurch gekennzeichnet, dass**
die Markierung (2) bei der Reifenvulkanisation in die Seitwand (1) des Fahrzeugreifens aufgebracht wird .

9. Verfahren nach einem der vorhergehenden Ansprüche,
**dadurch gekennzeichnet, dass**
das Eingravieren der Codierung mit einem Laser erfolgt.

10. Verfahren nach einem der vorhergehenden Ansprüche,
**dadurch gekennzeichnet, dass**
die Codierung einen QR-Code und/ oder einen zweiten Code umfasst.

## Claims

1. Method for applying a coding to a sidewall (1) of a vehicle tyre, having the following steps:
a) providing a vehicle tyre on a holding device,
b) using a camera and an image recognition application to detect a marking on the sidewall (1) of the vehicle tyre,
c) detecting the marking (2) in the form of two conjoined triangles,
wherein the triangles are congruent and are joined to one another at one of the triangle vertices,
d) engraving a coding on a free surface area (5, 6) alongside the marking (2).

2. Method according to Claim 1,
**characterized in that**
the marking (2) with the two conjoined triangles takes the form of an upright hourglass on the sidewall (1) of the vehicle tyre.

3. Method according to Claim 2,
**characterized**
**in that** the width dimension (3) of the hourglass is 3.5 mm to 14 mm, preferably 6 to 8 mm.

4. Method according to one of the preceding Claims 2 to 3,
**characterized in that**
the height dimension (4) of the hourglass is 7 mm to 28 mm, preferably 13 to 15 mm.

5. Method according to one of the preceding Claims 2 to 4,
**characterized in that**
the marking (2) of the hourglass protrudes from the subsurface of the sidewall (1), wherein the depth dimension (9) with respect to the subsurface is between 0.3 mm and 0.8 mm, preferably 0.4 to 0.8 mm.

6. Method according to one of the preceding Claims 2 to 5,
**characterized in that**
the marking (2) of the hourglass has a bevel (7) in its peripheral areas.

7. Method according to Claim 6,
**characterized in that**
the flank angle of the bevel (7) with respect to the subsurface of the sidewall is between 0 and 45 degrees, preferably between 10 and 30 degrees.

8. Method according to one of the preceding claims,
**characterized in that**
the marking (2) is applied to the sidewall (1) of the vehicle tyre during the vulcanizing of the tyre.

9. Method according to one of the preceding claims,
**characterized in that**
the engraving of the coding takes place with a laser.

10. Method according to one of the preceding claims,
**characterized in that**
the coding comprises a QR code and/or a second code.

## Revendications

1. Procédé d'application d'un code sur un flanc (1) d'un pneu de véhicule avec des étapes suivantes :
a) fourniture d'un pneu de véhicule sur un dispositif de maintien,
b) utilisation d'une caméra et d'une application de reconnaissance d'image pour détecter un marquage sur le flanc (1) du pneu de véhicule,
c) détection du marquage (2) sous la forme de deux triangles assemblés,
les triangles étant congruents et reliés l'un à l'autre sur un des sommets de triangle,
d) gravure d'un code sur une surface libre (5, 6) à côté du marquage (2).

2. Procédé selon la revendication 1,
**caractérisé en ce que**
le marquage (2) est formé avec les deux triangles assemblés sous la forme d'un sablier se dressant verticalement sur le flanc (1) du pneu de véhicule.

3. Procédé selon la revendication 2,
**caractérisé en ce**
**que** la dimension de largeur (3) du sablier va de 3,5 mm à 14 mm, de préférence de 6 à 8 mm.

4. Procédé selon l'une des revendications précédentes 2 à 3,
**caractérisé en ce que**
la dimension de hauteur (4) du sablier va de 7 mm à 28 mm, de préférence de 13 à 15 mm.

5. Procédé selon l'une des revendications précédentes 2 à 4,
**caractérisé en ce que**
le marquage (2) du sablier dépasse par rapport à la base du flanc (1), la dimension de profondeur (9) par rapport à la base allant de 0,3 mm et 0,8 mm, de préférence allant de 0,4 à 0,8 mm.

6. Procédé selon l'une des revendications précédentes 2 à 5,
**caractérisé en ce que**
le marquage (2) du sablier comporte dans ses zones de bord un chanfrein (7).

7. Procédé selon la revendication 6,
**caractérisé en ce que**
l'angle de flanc du chanfrein (7) par rapport à la base du flanc va de 0 à 45 degrés, de préférence de 10 à 30 degrés.

8. Procédé selon l'une des revendications précédentes,
**caractérisé en ce que**
le marquage (2) est appliqué dans le flanc (1) du pneu de véhicule lors de la vulcanisation de pneu.

9. Procédé selon l'une des revendications précédentes,
**caractérisé en ce que**
la gravure du code est effectuée avec un laser.

10. Procédé selon l'une des revendications précédentes,
**caractérisé en ce que**
le code comprend un QR code et/ou un deuxième code.
